**Europäisches Patentamt**

**European Patent Office**

(19)

**Office européen des brevets**

(11) Veröffentlichungsnummer: **0 001 745**
**B1**

(12) **EUROPÄISCHE PATENTSCHRIFT**

(45) Veröffentlichungstag der Patentschrift:
07.01.81

(51) Int. Cl.³: **G 02 F 1/13**

(21) Anmeldenummer: **78100930.3**

(22) Anmeldetag: **19.09.78**

(54) **Elektrooptischer Modulator und eine Verwendung desselben.**

(30) Priorität: **29.10.77 DE 2748738**

(43) Veröffentlichungstag der Anmeldung:
**16.05.79 Patentblatt 79/10**

(45) Bekanntmachung des Hinweises auf die Patenterteilung:
**07.01.81 Patentblatt 81/1**

(84) Benannte Vertragsstaaten:
**CH DE FR GB NL**

(56) Entgegenhaltungen:
**FR-A-2 213 721**
**THE JOURNAL OF CHEMICAL PHYSICS, Band 50, Nr. 3,**
**1. Februar 1969, New York, USA**
**R. WILLIAMS "Optical-rotatory power and linear electro-optic effect in nematic liquid crystals of p-Azoxyanisole", Seiten 1324–32**

(73) Patentinhaber: **Merck Patent Gesellschaft mit beschränkter Haftung, Frankfurter Strasse 250, D-6100 Darmstadt (DE)**

(72) Erfinder: **Pohl, Ludwig, Dr., Hoffmannstrasse 54, D-6100 Darmstadt (DE)**
Erfinder: **Eidenschink, Dr., Dessauer Strasse 57, D-6110 Dieburg (DE)**
Erfinder: **Krause, Joachim, Dr., Samuel- Morse-Strasse 14, D-6110 Dieburg (DE)**
Erfinder: **Weber, Georg, Wilhelm-Leuschner-Strasse 38, D-6106 Erzhausen (DE)**

ACTORUM AG.

## Elektrooptischer Modulator und eine Verwendung desselben

Die Erfindung betrifft einen elektrooptischen Modulator auf der Basis einer Flüssigkristallzelle, der mit Hilfe von elektrischen Impulsen aktiv ein- und ausgeschaltet werden kann.

In den bisher bekannten elektrooptischen Modulatoren auf der Basis von Flüssigkristallzellen werden die bei nematischen oder nematisch-cholesterischen Materialien beobachteten Phänomene ausgenutzt, ihre optischen Eigenschaften wie Lichtstreuung, Reflexionsvermögen, Doppelbrechung oder Farbe unter dem Einfluss elektrischer Felder signifikant zu verändern. Zu grosser Bedeutung sind insbesondere Modulatoren gelangt, in denen Flüssigkristallmaterialien mit positiver dielektrischer Anisotropie (positiver DKA) verwendet werden, deren Moleküle im feldfreien Zustand mit ihrer Längsachse parallel zur Elektrodenoberfläche orientiert sind. In der Praxis, zum Beispiel für Anzeigeelemente von Digitaluhren oder elektronischen Rechengeräten, werden in grossem Umfang derartige Flüssigkristallzellen verwendet, in denen diese Parallelorientierung der Flüssigkristallmoleküle homogen oder aber von einer Elektrodenoberfläche zur anderen um einen bestimmten Winkel, vorzugsweise 90°, verdrillt ist.

Im Interesse einer vielseitigen Anwendbarkeit derartiger Modulatoren ist es erwünscht, die Orientierung der Flüssigkristallmoleküle bezüglich der Elektrodenoberflächen zwischen den Grenzwerten der parallelen und der senkrechten Orientierung beliebig einstellen zu können, die Schwellenspannung bei einem vorgegebenen Flüssigkristallmaterial variieren zu können und kurze Schaltzeiten zu erreichen.

Durch eine frei wählbare Molekülorientierung kann z.B. die Anzahl der auftretenden Interferenzfarben bei der Anwendung des Freedericksz-Effekts oder des Effekts der Deformation aufgerichteter Phasen (DAP-Effekt) beeinflusst werden. Diese Effekte spielen bei der Konstruktion von Flüssigkristall-Farbanzeigen eine wichtige Rolle. Treten mehr als zwei Ordnungen von Interferenzfarben auf, so lassen sich reine Farbtöne mit auf dieser Basis arbeitenden Flüssigkristallanzeigeelementen nur schwer realisieren; für sogenannte Farbschalter werden daher bisher überwiegend Mischungen von Flüssigkristallmaterialien mit dichroitischen Farbstoffen verwendet, obwohl die flüssigkristallinen Eigenschaften der Basismaterialien durch Farbstoffzusätze in der Regel ungünstig beeinflusst werden.

Durch die Variabilität der Schwellenspannung wird eine Änderung der Betriebsspannung von Flüssigkristallzellen ermöglicht; wenn ausserdem die Schwellenspannung an verschiedenen Stellen eines Anzeigeelements unterschiedlich beeinflusst werden kann, lässt sich der Anzeigekontrast bei einer Flüssigkristallzelle deutlich verbessern.

Schliesslich erlaubt eine Verkürzung der Schaltzeiten eine Erhöhung der Zahl der Schaltvorgänge in einer Zeiteinheit und damit eine Vergrösserung der Zahl der durch ein Anzeigeelement übertragbaren Informationen.

Die Schaltzeit einer Flüssigkristallzelle setzt sich aus der Einschaltzeit und der Ausschaltzeit zusammen. Dabei ist die Einschaltzeit als die Zeitspanne definiert, die zwischen dem Zeitpunkt des Einschaltens des elektrischen Feldes und dem Erreichen von 90% des maximalen Anzeigekontrasts verstreicht; analog ist die Ausschaltzeit die Zeitspanne zwischen dem Zeitpunkt des Abschaltens des elektrischen Feldes und dem Abfall des Kontrastverhältnisses um 90%. Von diesen beiden Komponenten der Schaltzeit lässt sich nur die Einschaltzeit durch die Höhe der angelegten Spannung beeinflussen. In gebräuchlichen Flüssigkristall-Anzeigeelementen lassen sich durchaus akzeptable Einschaltzeiten in der Grössenordnung von 1–10 Millisekunden (ms) erreichen. Dagegen beträgt die Ausschaltzeit in der Regel zwischen 30 und 300 ms; sie ist im wesentlichen nur von der Dicke der Flüssigkristallschicht sowie der Viskosität und der Grösse der Elastizitätskonstanten des verwendeten Flüssigkristallmaterials abhängig, nicht aber von der Höhe der angelegten Steuerspannung.

In der DT-AS 24 50 390 ist bereits vorgeschlagen worden, bei der Konstruktion eines Lichtverschlusses auf der Basis einer Flüssigkristallzelle diesem Nachteil dadurch zu begegnen, dass im Lichtweg zwei getrennt ansteuerbare Flüssigkristallzellen hintereinander angeordnet werden. Die beiden Flüssigkristallzellen enthalten jeweils in sich um 90° verdrillte Flüssigkristallschichten und sind in Verbindung mit Polarisatoren so angeordnet, dass im feldfreien Zustand kein Licht hindurchtreten kann. Sobald eine dieser Zellen durch ein elektrisches Feld aktiviert wird, wird die Anordnung nach Ablauf der Einschaltzeit lichtdurchlässig. Durch nachfolgende Aktivierung der zweiten Zelle wird die Anordnung nach Ablauf einer zweiten Einschaltzeit wieder lichtundurchlässig.

Es ist offensichtlich, dass eine derartige Anordnung von zwei Flüssigkristallzellen einen hohen konstruktiven Aufwand erfordert und ihre Anwendbarkeit dadurch sehr begrenzt ist.

Der Erfindung liegt die Aufgabe zugrunde, einen elektrooptischen Modulator auf der Basis einer Flüssigkristallzelle zu schaffen, bei dem die Ausgangsorientierung der Flüssigkristallmoleküle bezüglich der Elektrodenoberflächen, die Schwellenspannung oder die Ausschaltzeit oder gleichzeitig auch zwei dieser Eigenschaften durch elektrische und/oder magnetische Felder beeinflusst werden können.

Diese Aufgabe wird erfindungsgemäss durch eine Flüssigkristallzelle gelöst, die eine dünne Schicht eines Flüssigkristallmaterials mit positiver DKA zwischen transparenten Elektrodengrundplatten mit je einer Schicht aus elektrisch leitfähigem transparentem Elektrodenmaterial, an das eine elektrische Spannung angelegt werden kann, enthält und bei der die Elektrodenplatten sandwichartig von Polarisatoren eingeschlossen sind, wobei zwei Magnete so angeordnet sind, dass deren magnetische Feldlinien parallel oder senkrecht zu den Hauptflächen der Elektrodengrundplatten verlaufen, und das Flüssigkristallmaterial eine negative diamagnetische Suszeptibilitätsanisotropie (negative DMA) aufweist. In einer bevorzugten Ausführungsform des erfindungsgemässen elektroopitschen Modulators werden parallel zu den Elektrodengrundplatten zwischen diesen und dem Elektrodenmaterial oder zwischen dem Elektrodenmaterial und dem Flüssigkristallmaterial angeordnete transparente magnetische Schichten verwendet, bei denen die Richtung des Magnetfeldes senkrecht zur Magnetschichtoberfläche ist und vorzugsweise durch elektrische Impulse um 90° gedreht werden kann.

Im «Journal of Chemical Physics», Band 50 (1969), Seiten 1328 und 1329, sind bereits optische Eigenschaften des Flüssigkristalls p-Azoxyanisol bei gleichzeitiger Anwesenheit eines magnetischen und eines elektrischen Feldes beschrieben. p-Azoxyanisol besitzt jedoch eine positive DMA und ist daher mit dem gemäss der Erfindung verwendeten Flüssigkristallmaterial nicht vergleichbar. Ferner ist dieser Publikation kein Hinweis auf die Anwendung der dort berichteten Ergebnisse in der Form eines elektrooptischen Modulators zu entnehmen.

In der erfindungsgemässen Vorrichtung kann durch die Kombination von elektrischem und magnetischem Feld die molekulare Orientierung des Flüssigkristallmaterials mit positiver DKA und negativer DMA so beeinflusst werden, dass der Winkel bezüglich der Elektrodenoberflächen einen beliebigen Wert zwischen 0° und 90° annimmt, dass die Schwellenspannung erhöht und/oder erniedrigt wird und dass die Ausschaltzeit im Vergleich zu der eines Modulators ohne Magnete deutlich verkürzt wird. In der bevorzugten Ausführungsform wird durch Ausschalten des elektrischen Feldes und gleichzeitige Drehung des vorher parallel zu den Elektrodenplatten gerichteten Magnetfeldes um 90° durch einen geeigneten Steuerstrom der Effekt des aktiven Ausschaltens der Flüssigkristallzelle erzielt. Wenn die erfindungsgemässen Modulatoren als Matrix-Displays gebaut sind, kann durch gezieltes Ansteuern solcher Stellen der Magnetschichten, die sich über oder unter den nicht angesteuerten Stellen der Elektrodenschichten befinden, das unerwünschte Übersprechen verhindert und damit die Anzeigeschärfe deutlich verbessert werden.

Die Erfindung wird im folgenden anhand von fünf Figuren näher erläutert. Es zeigt

Fig. 1 den schematischen Aufbau eines erfindungsgemässen Modulators mit parallel zu den Elektrodengrundplatten angeordneten Magneten,

Fig. 2 den schematischen Aufbau eines erfindungsgemässen Modulators mit senkrecht zu den Elektrodengrundplatten angeordneten Magneten,

Fig. 3 eine bevorzugte Ausführungsform des erfindungsgemässen Modulators mit parallel zu den Elektrodengrundplatten angeordneten transparenten Magneten, bei denen die Magnetfeldrichtung durch elektrische Impulse gedreht werden kann,

Fig. 4 und Fig. 5 graphische Darstellungen der Beeinflussung der Schwellenspannung bzw. der Ausschaltzeit durch die Flussdichte des angelegten Magnetfeldes.

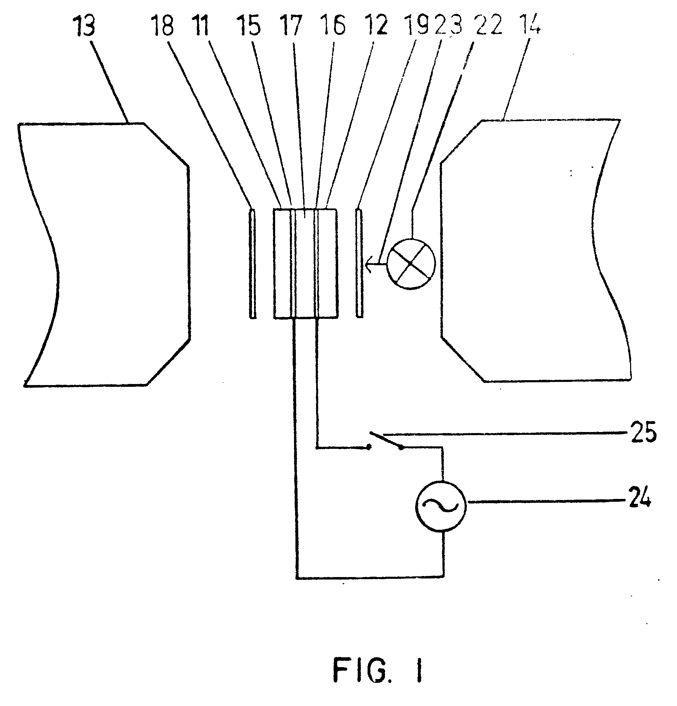

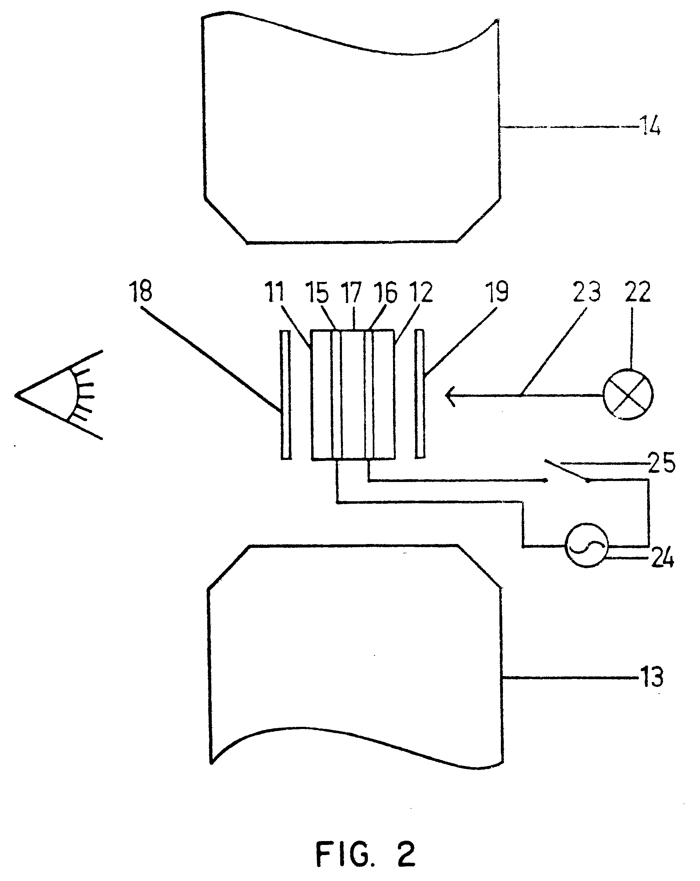

In den Fig. 1 und 2 sind mit 11 und 12 die Elektrodengrundplatten bezeichnet, die mit je einer transparenten Elektrodenschicht 15 und 16 beschichtet sind. Diese Elektrodenschichten sind mit einer Spannungsquelle 24 verbunden, die mit dem Schalter 25 ein- und ausgeschaltet werden kann. Zwischen den Elektrodenschichten (15, 16) befindet sich die Flüssigkristallschicht 17 aus einem nematischen Flüssigkristallmaterial mit positiver DKA und negativer DMA und in sich vorzugsweise um 90 verdrillter Struktur. Ausserhalb der Elektrodengrundplatten sind die Polarisatoren 18 und 19 so angeordnet, dass die Polarisationsebene jedes Polarisators parallel zur Richtung der Vorzugsorientierung der Flüssigkristallmoleküle an der angrenzenden Elektrodenschicht ist.

Schliesslich sind in Fig. 1 parallel zu den Elektrodengrundpatten und in Fig. 2 senkrecht zu den Elektrodengrundplatten die Magnete 13 und 14 mit unterschiedlicher Polarität so angeordnet, dass ein möglichst homogenes Magnetfeld parallel bzw. senkrecht zur Richtung des elektrischen Feldes zwischen den Elektrodenschichten (15, 16) besteht oder errichtet werden kann.

Als Elektrodengrundplatten (11, 12), Elektrodenschichten (15, 16), Polarisatoren (18, 19), Lichtquelle (22), Spannungsquelle (24) und Schalter (25) können im Rahmen der vorliegenden Erfindung alle bei Flüssigkristallzellen üblichen Materialien, Strukturen, Schaltungen und Elemente verwendet werden. Die Magnete (13, 14) sind entweder Permanentmagnete oder vorzugsweise Elektromagnete, deren magnetische Flussdichte durch Einstellung der elektrischen Stromstärke möglichst kontinuierlich regelbar ist.

Als nematisches Flüssigkristallmaterial für die Flüssigkristallschicht 17 kann jedes mit positiver DKA und negativer DMA eingesetzt werden. Bevorzugte Materialien dieser Art enthalten mindestens ein trans-4,4'-disubstituiertes Cyclohexylcyclohexanderivat; diese Verbindungen sind in der deutschen Patentanmeldung P 27 02 598.5 beschrieben. Die verdrillte Struktur der Vorzugsorientierung der Flüssigkristallschicht kann nach bekannten Verfahren, zum Beispiel durch Zusatz optisch aktiver Verbindungen oder durch eine spezifische Oberflächenbehandlung der angrenzenden Elektrodenschichten erzeugt werden.

Die Flüssigkristallzelle gemäss Fig. 1 ist in ausgeschaltetem Zustand, d.h., wenn keine Spannung an die Elektrodenschichten (15, 16) oder Tei-

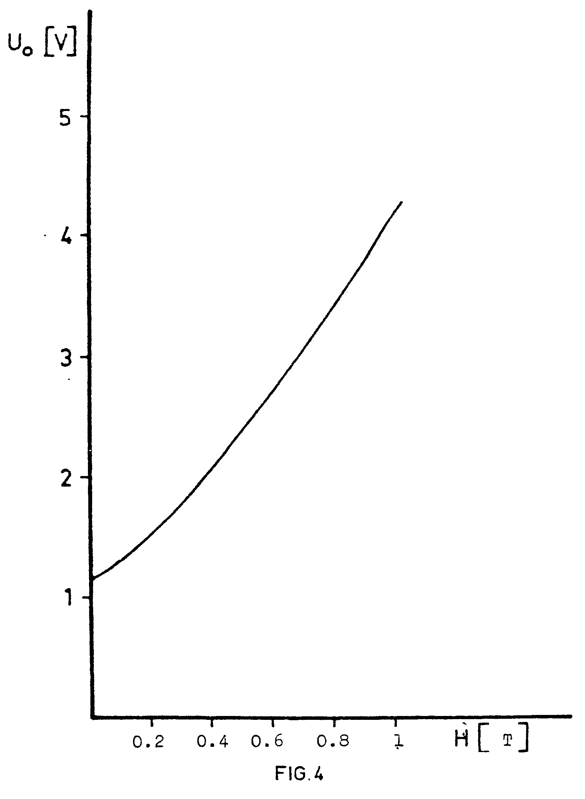

le davon angelegt ist und kein Magnetfeld vorhanden ist, für das von der Lichtquelle 22 her einfallende Licht 23 durchlässig, weil die Schwingungsebene des durch den Polarisator 19 linear polarisierten Lichts der Richtung der Vorzugsorientierung der Flüssigkristallmoleküle folgt und das Licht somit durch den Polarisator 18 wieder austreten kann. Wenn nun an die Elektroden (15, 16) eine Spannung angelegt wird, die grösser ist als die Schwellenspannung der Flüssigkristallschicht 17, so werden die Moleküle der nematischen Substanz mit ihrer Moleküllängsachse in die Richtung des – senkrecht zu den Elektroden (15, 16) stehenden – elektrischen Feldes gedreht. Damit verschwindet die verdrillte Struktur und damit die optische Aktivität der Flüssigkristallschicht, und das durch den Polarisator (19) eintretende Licht kann durch den Polarisator (18) nicht mehr austreten; die Zelle ist somit lichtundurchlässig geworden. Die Dauer dieses Vorgangs entspricht in der Praxis der Einschaltzeit, die bei herkömmlichen Vorrichtungen im Bereich von 1–50 ms liegt. Wenn die Spannung abgeschaltet wird, kehren die Flüssigkristallmoleküle im Verlauf der Ausschaltzeit in die ursprüngliche verdrillte Struktur zurück, so dass die Zelle wieder lichtdurchlässig ist. Wenn jetzt in der erfindungsgemässen Vorrichtung ein zu den Elektroden senkrechtes und damit zum errichtbaren elektrischen Feld paralleles Magnetfeld besteht, wirkt auf die Flüssigkristallmoleküle aufgrund ihrer negativen DMA eine Kraft, die die Moleküllängsachse senkrecht zur Magnetfeldrichtung und damit parallel zu den Elektrodenschichten (15, 16) halten oder ausrichten will. Wird jetzt eine elektrische Spannung angelegt, dann wirkt die vom Magnetfeld herrührende, die Flüssigkristallmoleküle in Parallelorientierung zu den Elektrodengrundplatten haltende Kraft der durch das elektrische Feld ausgeübten Kraft, die die Moleküllängsachse in Feldrichtung orientieren will, entgegen. Es wird daher ein stärkeres elektrisches Feld erforderlich, um die Orientierung in Feldrichtung zu bewirken, d.h. die Schwellenspannung der Flüssigkristallschicht (17) wird erhöht. Fig. 4 ist eine graphische Darstellung der Beeinflussung der Schwellenspannung durch die Stärke des angelegten magnetischen Feldes. In der Figur ist auf der Abszisse die magnetische Flussdichte H in Tesla (T) und auf der Ordinate die Schwellenspannung $U_o$ in Volt (V) aufgetragen. Die Werte wurden bei Zimmertemperatur in einer Zelle mit einer 40 μ dicken, um 90° verdrillten nematischen Flüssigkristallschicht aus 50% trans-4-[trans-4′-n-Pentylcyclohexyl-(1′)]-cyclohexan-(1)-carbonitril, 40% trans-4-[trans-4′-n-Heptylcyclohexyl-(1)]-cyclohexan-(1)-carbonitril und 10% trans-4-n-Pentyl-1-(4′-cyanophenyl)-cyclohexan (DKA = +4; DMA = $-2 \cdot 10^{-8}$ cm³/g) bestimmt. Aus der Figur ist zu erkennen, dass durch ein Magnetfeld mit einer Flussdichte von 0,5 T die Schwellenspannung etwa auf den zweifachen Wert erhöht wird.

Wird in der erfindungsgemässen Anordnung gemäss Fig. 1 mit zueinander parallelen elektrischen und magnetischen Feldern die Spannung, d.h. das elektrische Feld, abgeschaltet, so wird die Rückkehr der Flüssigkristallmoleküle aus der Orientierung in Richtung des elektrischen Feldes in eine zu den begrenzenden Elektroden parallele (verdrillte) Orientierung durch das Magnetfeld beschleunigt. Dadurch wird die Ausschaltzeit verkürzt, wobei das Ausmass der Verkürzung von der Stärke des Magnetfeldes und der Grösse der negativen DMA abhängt. Der gleiche Effekt wird natürlich auch erzielt, wenn das Magnetfeld erst in dem Moment eingeschaltet wird, in dem die Spannung abgeschaltet wird. Auf diese Weise stellt die erfindungsgemässe Vorrichtung einen durch elektrische Impulse aktiv ein- und ausschaltbaren elektrooptischen Modulator auf der Basis einer Flüssigkristallzelle dar.

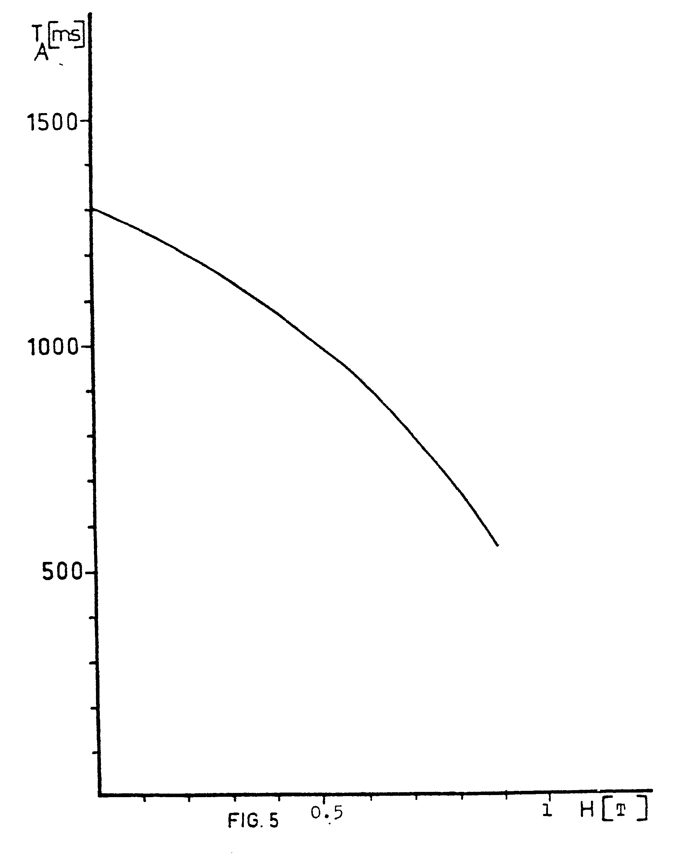

Fig. 5 ist eine graphische Darstellung der Beeinflussung der Ausschaltzeit durch ein magnetisches Feld. Als Abszisse ist wieder die magnetische Flussdichte H in T und als Ordinate die Ausschaltzeit $T_A$ in Millisekunden [ms] aufgetragen. Es wurde wieder eine Zelle mit einer 40 μ dicken Flüssigkristallschicht der vorstehend angegebenen Zusammensetzung verwendet. Bereits diese noch nicht optimierte Versuchsanordnung lässt erkennen, dass die Ausschaltzeit durch ein Magnetfeld von etwa 0,5 T um etwa 25% und durch ein Magnetfeld von etwa 0,8 T auf etwa die Hälfte des Ausgangswertes in Abwesenheit eines Magnetfeldes verkürzt werden kann.

Die Arbeitsweise einer Vorrichtung gemäss Fig. 2 entspricht, solange kein Magnetfeld vorhanden ist, d.h. beim Ein- und Ausschalten einer die Schwellenspannung übersteigenden elektrischen Spannung, vollständig der für die Vorrichtung gemäss Fig. 1 beschriebenen Arbeitsweise in Abwesenheit eines Magnetfeldes. Wird jetzt an die spannungslose Vorrichtung gemäss Fig. 2 ein zu den Elektrodenschichten paralleles und damit zum errichtbaren elektrischen Feld senkrechtes Magnetfeld angelegt, so wirkt in Abwesenheit dieses elektrischen Feldes auf die durch die Oberflächenkräfte an den Elektrodenschichten (15, 16) parallel zu diesen ausgerichteten Flüssigkristallmoleküle aufgrund ihrer negativen DMA eine Kraft, die die Moleküllängsachsen in die zur Magnetfeldrichtung und damit zu den Elektrodenoberflächen senkrechte Richtung zieht. Dies führt dazu, dass die Flüssigkristallmoleküle der gesamten Schicht sich unter Beibehaltung der verdrillten Struktur in die Richtung der Resultierenden aus der Oberflächenkraft und der vom Magnetfeld herrührenden Drehkraft orientieren. Durch Variation der magnetischen Feldstärke kann die Richtung der Resultierenden und damit also die Molekülorientierung in der Flüssigkristallschicht in grossem Umfang frei gewählt werden. Ausser der vorstehend beschriebenen Bedeutung für die Herstellung von Flüssigkristall-Farbanzeigen wird durch diesen Effekt auch die Schwellenspannung beeinflusst: sie wird um so niedriger, je grösser die magnetische Flussdichte ist.

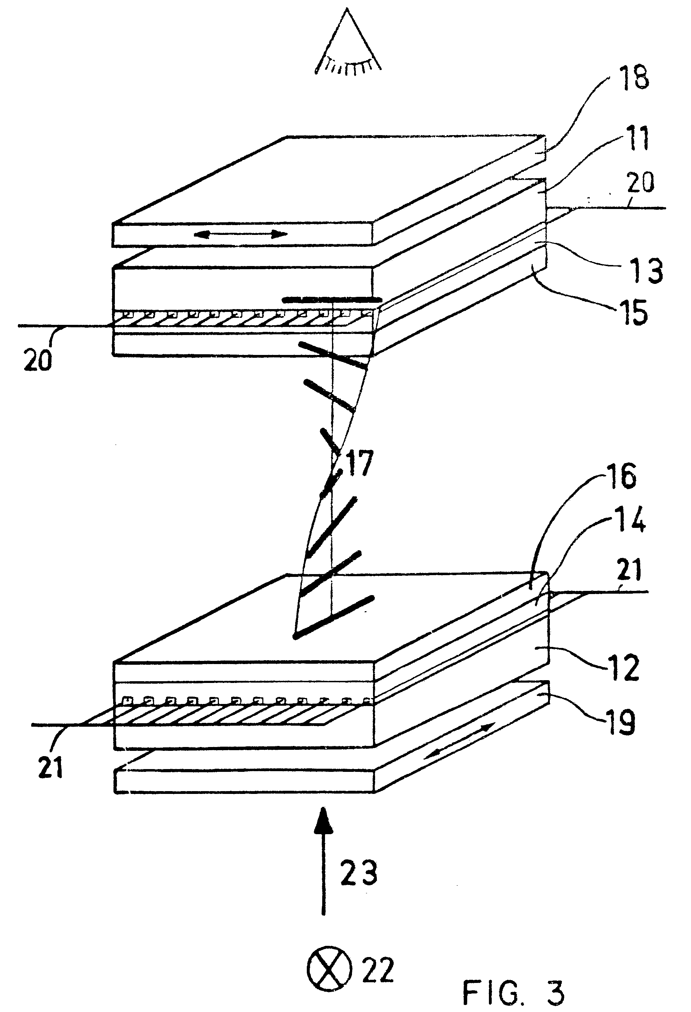

In Fig. 3 ist eine bevorzugte Ausführungsform des erfindungsgemässen elektrooptischen Modulators mit parallel zu den Elektrodenschichten angeordneten Magneten dargestellt.

Mit 11 und 12 sind darin wieder die Elektrodengrundplatten bezeichnet, die jeweils mit einer transparenten magnetischen Schicht 13 und 14 und darauf jeweils mit einer transparenten Elektrodenschicht 15 und 16 beschichtet sind. Die Reihenfolge dieser beiden Schichten ist erfindungsgemäss in dieser Ausführungsform nicht wesentlich, es können also auf den Elektrodengrundplatten 11 und 12 auch zunächst die Elektrodenschichten (15 und 16, zur besseren Übersicht ohne Zuleitungen gezeichnet) und dann die magnetischen Schichten (13 und 14) aufgebracht sein. Unter den magnetischen Schichten sind elektrische Leiterbahnen 20 und 21 angebracht, die es ermöglichen, mit Hilfe von Steuerströmen das Magnetfeld der magnetischen Schicht um 90° zu drehen. Zwischen den beschichteten Elektrodengrundplatten (11, 13, 15 und 12, 14, 16) befindet sich eine Flüssigkristallschicht 17 aus einem nematischen Flüssigkristallmaterial mit positiver DKA und negativer DMA. die Vorzugsorientierung der Moleküle des Flüssigkristallmaterials ist von der einen zu der anderen der begrenzenden Schichten (magnetische Schichten oder Elektrodenschichten) um 90° gegeneinander verdreht. Von der Flüssigkristallschicht her gesehen hinter den Elektrodengrundplatten sind schliesslich die Polarisatoren 18 und 19 so angeordnet, dass die Polarisationsebene jedes Polarisators parallel zur Richtung der Vorzugsorientierung der Flüssigkristallmoleküle an der angrenzenden Elektroden- bzw. magnetischen Schicht ist.

Als Elektrodengrundplatten (11, 12), Elektrodenschichten (15, 16) und Polarisatoren (18, 19) lassen sich auch in dieser bevorzugten Ausführungsform alle bei Flüssigkristallzellen üblichen Strukturen und Materialien verwenden. Die magnetischen Schichten können beispielsweise aus aufgedampften Permalloy oder Yttriumeisengranat oder anderen in der Elektronikindustrie für die Herstellung magnetischer Schichten gebräuchlichen Materialien bestehen.

Diese bevorzugte Ausführungsform gemäss Fig. 3 wird vorzugsweise in Matrix-Displays verwendet, in denen jeder «Anzeigepunkt» eines Elektrodenrasters durch Anlegen einer Spannung an eine aus einer Vielzahl waagerechter Leiterzeilen bestehende erste Elektrodenschicht und an eine aus einer Vielzahl senkrechter Leiterreihen bestehende andere Elektrodenschicht selektiv angesteuert werden kann. Ein Nachteil dieser Matrix-Displays ist die als «Übersprechen» bezeichnete partielle Aktivierung von Anzeigepunkten in der unmittelbaren Nachbarschaft eines angesteuerten Anzeigepunktes, die den Kontrast der Anzeige in unerwünschter Weise vermindert. Wenn in der erfindungsgemässen Vorrichtung gemäss Fig. 3 die magnetischen Schichten (13, 14) in analoger Weise aus einzeln ansteuerbaren «Magnetfeldpunkten» bestehen, kann durch selektives Einschalten der dem angesteuerten Elektroden-Anzeigepunkt benachbarten Magnetfeldpunkte die Schwellenspannung an den nicht angesteuerten Anzeigepunkten des Elektrodenrasters soweit erhöht werden, dass das Übersprechen verhindert wird. Hierzu reicht in der Regel schon eine Erhöhung der Schwellenspannung um 10–20% aus, die beispielsweise in der erfindungsgemässen Anordnung, mit der die Kurve von Fig. 4 aufgenommen wurde, mit magnetischen Flussdichten von 0,8–0,15 T erzielt wird.

Durch eine grosse Zahl von dem Fachmann geläufigen Modifikationen können mit Hilfe des erfindungsgemässen elektrooptischen Modulators verschiedenartige vorteilhafte Effekte erzielt werden, durch die die Erfindung auf den unterschiedlichsten Gebieten angewendet werden kann. So können Anzeigeelemente für Rechengeräte oder Uhren aus den erfindungsgemässen Modulatoren hergestellt werden. Weitere Anwendungsbereiche sind die Fernsehtechnik, die elektronische Datenverarbeitung und der Kamerabau:

**Patentansprüche**

1. Elektooptischer Modulator auf der Basis einer Flüssigkristallzelle mit einer dünnen Schicht eines Flüssigkristallmaterials mit positiver dielektrischer Anisotropie zwischen zwei Elektrodengrundplatten mit je einer lichtdurchlässigen elektrisch leitfähigen Elektrodenschicht, an die eine elektrische Spannung gelegt werden kann, und mit die Elektrodengrundplatten sandwichartig einschliessenden Polarisatoren, dadurch gekennzeichnet, dass zwei Magnete so angeordnet sind, dass deren magnetische Feldlinien parallel oder senkrecht zu den Hauptflächen der Elektrodengrundplatten verlaufen, und dass das Flüssigkristallmaterial eine negative diamagnetische Suszeptibilitäts-Anisotropie besitzt.

2. Elektrooptischer Modulator nach Anspruch 1, dadurch gekennzeichnet, dass die magnetischen Feldlinien parallel zu den Oberflächen der Elektrodengrundplatten verlaufen.

3. Elektrooptischer Modulator nach Anspruch 1, dadurch gekennzeichnet, dass die magnetischen Feldlinien senkrecht zu den Oberflächen der Elektrodengrundplatten verlaufen.

4. Modulator nach Anspruch 1, dadurch gekennzeichnet, dass die Magnete Permanentmagnete sind.

5. Modulator nach Anspruch 1, dadurch gekennzeichnet, dass die Magnete Elektromagnete sind, deren Feldstärke variiert werden kann.

6. Modulator nach Anspruch 3, dadurch gekennzeichnet, dass die Magnete lichtdurchlässige magnetische Schichten sind, die auf die Elektrodenschichten so aufgebracht sind, dass sie zwischen diesen und der Flüssigkristallschicht liegen, und dass deren Magnetfeld senkrecht aus der Magnetschichtoberfläche austritt.

7. Modulator nach Anspruch 3, dadurch gekennzeichnet, dass die Magnete lichtdurchlässige magnetische Schichten sind, die auf die Elektrodengrundplatten so aufgebracht sind, dass sie zwischen diesen und den Schichten aus Elektrodenmaterial liegen, und dass deren Magnetfeld senkrecht aus der Magnetschichtoberfläche heraustritt.

8. Modulator nach Anspruch 6 oder 7, dadurch gekennzeichnet, dass die magnetischen Schichten mit elektrischen Leiterbahnen versehen sind, über die mit Hilfe elektrischer Steuerströme die Richtung des Magnetfeldes der magnetischen Schichten um 90° gedreht werden kann.

9. Modulator nach den Ansprüchen 1 bis 8, dadurch gekennzeichnet, dass das Flüssigkristallmaterial mindestens ein trans-4,4'-disubstituiertes Cyclohexylcyclohexanderivat enthält.

10. Verwendung des elektrooptischen Modulators nach Anspruch 1 zur Herstellung von Lichtverschlüssen oder Anzeigeelementen für Rechengeräte, Uhren, Fernsehgeräte und elektronische Datenverarbeitungsanlagen.

## Claims

1. An electro-optical modulator based on a liquid crystal cell having a thin layer of a liquid crystal material with a positive dielectric anisotropy between two electrode base plates, which each have one transparent electrically conductive electrode layer to which an electric voltage can be applied, and polarizers which enclose the electrode base plates like a sandwich, characterized in that two magnets are provided in a manner that their magnetic field lines extend parallel or perpendicular to the principal surfaces of the electrode base plates, and the liquid crystal material has a negative anisotropy of the diamagnetic susceptibility.

2. An electro-optical modulator as claimed in claim 1, wherein the magnetic field lines extend parallel to the surfaces of the electrode base plates.

3. An electro-optical modulator as claimed in claim 1, wherein the magnetic field lines extend perpendicular to the surfaces of the electrode base plates.

4. A modulator as claimed in claim 1, wherein the magnets are permanent magnets.

5. A modulator as claimed in claim 1, wherein the magnets are electromagnets, the field strength of which can be varied.

6. A modulator as claimed in claim 3, wherein the magnets are transparent magnetic layers which have been applied to the electrode base plates between the layer of electrode material and the liquid crystal layer and the magnetic field of which emerges perpendicularly from the surface of the magnetic layer.

7. A modulator as claimed in claim 3, wherein the magnets are transparent magnetic layers which have been applied to the electrode base plates between the electrode base plate and the layer of electrode material and the magnetic field of which emerges perpendicularly from the surface of the magnetic layer.

8. A modulator as claimed in claim 6 or 7, wherein the magnetic layers are provided with electric conductor paths, by means of which the direction of the magnetic field of the magnetic layers can be rotated by 90° with the aid of electric control currents.

9. A modulator as claimed in any of claims 1 to 8, wherein the liquid crystal material contains at least one trans-4,4'-disubstituted cyclohexylcyclohexane derivative.

10. The use of the electro-optical modulator, as claimed in claim 1, for the manufacture of light barriers or of display elements for calculators, clocks, television sets and electronic data-processing units.

## Revendications

1. Modulateur électro-optique à base d'un élément de cristal liquide comportant une couche mince d'un matériau de cristal liquide à anisotropie diélectrique positive entre deux plaques d'électrodes comportant chacune une couche d'électrode électriquement conductrice transparente, auxquelles peut être appliquée une tension électrique, et équipé de polariseurs entourant en sandwich les plaques d'électrodes, caractérisé en ce que deux aimants sont disposés de sorte que leurs lignes de champ magnétique s'étendent parallèlement ou perpendiculairement aux surfaces principales des plaques d'électrodes, et en ce que le matériau de cristal liquide possède une anisotropie de susceptibilité diamagnétique négative.

2. Modulateur électro-optique selon la revendication 1, caractérisé en ce que les lignes de champ magnétique s'étendent parallèlement aux surfaces des plaques d'électrodes.

3. Modulateur électro-optique selon la revendication 1, caractérisé en ce que les lignes de champ magnétique s'étendent perpendiculairement aux surfaces des plaques d'électrodes.

4. Modulateur selon la revendication 1, caractérisé en ce que les aimants sont des aimants permanents.

5. Modulateur selon la revendication 1, caractérisé en ce que les aimants sont des électroaimants dont l'intensité de champ peut être modifiée.

6. Modulateur selon la revendication 3, caractérisé en ce que les aimants sont des couches magnétiques transparentes, qui sont déposées sur les couches d'électrodes de sorte qu'elles se trouvent entre celles-ci et la couche de cristal liquide, et en ce que le champ magnétique de celles-ci sort perpendiculairement à la surface de la couche magnétique.

7. Modulateur selon la revendication 3, caractérisé en ce que les aimants sont des couches magnétiques transparentes, qui sont déposées sur les plaques d'électrodes, de sorte qu'elles se trouvent entre celles-ci et les couches en matériau d'électrode, et en ce que leur champ magnétique sort perpendiculairement de la surface de couche magnétique.

8. Modulateur selon l'une des revendications 6 et 7, caractérisé en ce que les couches magnétiques sont munies de pistes électriquement conductrices, par l'intermédiaire desquelles le sens du champ magnétique des couches magnétiques peut être tourné de 90° à l'aide de courants électriques de commande.

9. Modulateur selon l'une des revendications 1 à 8, caractérisé en ce que le matériau de cristal liquide contient au moins un dérivé de trans-4,4'-disubstitué cyclohexylcyclohexane.

10. Utilisation du modulateur électro-optique selon la revendication 1 en vue de la réalisation d'obturateurs de lumière ou d'éléments d'affichage pour calculateurs, horloges, téléviseurs et installations de traitement électronique de données.

0 001 745

FIG. 1

9

FIG. 2

FIG. 3

FIG. 4

FIG. 5